(19) Europäisches Patentamt

**European Patent Office**

**Office européen des brevets**

(11) Numéro de publication : **0 037 751**
**B1**

(12) **FASCICULE DE BREVET EUROPÉEN**

(45) Date de publication du fascicule du brevet :
13.06.84

(21) Numéro de dépôt : **81400338.0**

(22) Date de dépôt : **04.03.81**

(51) Int. Cl.³ : **H 02 H  3/10, H 02 H  1/06**

(54) **Déclencheur statique perfectionné pour disjoncteur électrique.**

(30) Priorité : 31.03.80 FR 8007284

(43) Date de publication de la demande :
14.10.81 Bulletin 81/41

(45) Mention de la délivrance du brevet :
13.06.84 Bulletin 84/24

(84) Etats contractants désignés :
**BE CH DE GB IT LI NL SE**

(56) Documents cités :
**CH-A-  462 937**
**FR-A- 2 212 666**
**US-A- 3 818 275**
**US-A- 4 004 201**
**US-A- 4 153 924**

(73) Titulaire : **MERLIN GERIN**
**Rue Henri Tarze**
**F-38050 Grenoble Cedex (FR)**

(72) Inventeur : **Claudin, Paul**
**Merlin Gerin Rue Henri Tarze**
**F-38050 Grenoble Cedex (FR)**
Inventeur : **Demeyer, Pierre**
**Merlin Gerin Rue Henri Tarze**
**F-38050 Grenoble Cedex (FR)**

(74) Mandataire : **Kern, Paul**
**Merlin Gerin Sce. Brevets 20, rue Henri Tarze**
**F-38050 Grenoble Cedex (FR)**

**Description**

L'invention est relative à un dispositif de déclenchement électronique selon le préambule de la revendication 1.

Dans un dispositif connu (US-A-3.818.275) du genre mentionné à propre courant, les transformateurs de courant fournissent le signal de mesure ou d'information et l'alimentation des circuits électroniques et de la bobine de commande du déclencheur. L'excitation de la bobine de déclenchement intervient par le déblocage du commutateur formé par un thyristor en série avec la bobine. Des moyens additionnels appliquent sélectivement l'énergie électrique soit au circuit de mesure et de surveillance, soit à la bobine de déclenchement. Ce dispositif est compliqué et pendant la phase de déclenchement le dispositif de mesure est hors-circuit.

Un autre déclencheur connu (US-A-4.004.201) comporte un circuit de mesure et un circuit d'alimentation, notamment d'une bobine de déclenchement, connectés en parallèle aux transformateurs de courant. Lors d'un déclenchement, le circuit de mesure reste alimenté, le courant se partageant entre les deux circuits. Seule une partie du courant délivré par les transformateurs de courant est disponible pour l'alimentation de la bobine.

La présente invention a pour but de remédier à ces inconvénients et de permettre la réalisation d'un déclencheur statique simple qui assure le maintien de l'alimentation du circuit de surveillance et l'excitation de la bobine de déclenchement par la totalité du courant délivré par le détecteur.

Pour atteindre le but précité le déclencheur selon la présente invention met en œuvre les caractéristiques définies dans les revendications.

Il a déjà été proposé (CH-A-462.937) de piloter l'excitation de la bobine de déclenchement d'un déclencheur statique par un commutateur inséré dans un circuit de shuntage de la bobine. Le courant parcourt ce circuit de shuntage lorsque le commutateur est fermé et ce courant est dérivé par la bobine dès l'ouverture du commutateur. Le circuit de déclenchement est connecté en parallèle au circuit de mesure aux bornes d'un transformateur de courant et le courant délivré par ce transformateur de courant est partagé en permanence entre les deux circuits.

Un autre dispositif connu (US-A-4.153.924) comporte des transformateurs de courant de dimension réduite et un condensateur d'accumulation d'énergie qui alimente en parallèle la bobine de déclenchement. Le signal fourni par les transformateurs de courant est appliqué à une résistance en série avec un dispositif d'alimentation comprenant le condensateur d'accumulation Une commande de déclenchement est tributaire de la charge du condensateur.

Selon une autre caractéristique de l'invention, ledit circuit série de la résistance de mesure, de l'alimentation et de la bobine de déclenchement est connecté aux bornes de sorties d'un générateur de courant formé par un dispositif redresseur alimenté par les transformateurs d'intensité du détecteur associés aux conducteurs de phase du réseau.

On remarque que dans l'état débloqué du commutateur, l'impédance Z du circuit série est faible et toute l'énergie électrique fournie par les transformateurs de courant associés aux conducteurs R, S, T des phases du réseau est utilisée pour fournir le signal de mesure et l'alimentation des circuits déclencheurs. Lors de l'émission d'un ordre de déclenchement provoquant le blocage du commutateur, l'impédance Z du circuit série augmente ainsi que la tension E redressée délivrée par les transformateurs jouant le rôle d'un générateur de courant. La majorité de l'énergie électrique sert à alimenter la bobine de déclenchement, mais l'alimentation de l'électronique de surveillance est maintenue.

Selon une caractéristique de l'invention, le signal de tension redressée aux bornes de la résistance de mesure est appliqué après traitement aux circuits déclencheurs long retard et court retard coopérant avec des moyens de temporisation pour délivrer soit un ordre de déclenchement retardé d'une durée fonction de la valeur de la surcharge, soit un ordre de déclenchement instantané sur court-circuit à une porte OU de commande du commutateur rendu non conducteur pour l'excitation de la bobine.

Selon une autre caractéristique de l'invention, le commutateur est formé par un premier transistor dont la base est reliée à la sortie de la porte OU de commande et dont le collecteur est connecté à la base d'un deuxième transistor de shuntage de la bobine de déclenchement.

Selon un développement de l'invention, les sorties des circuits déclencheurs long retard, court retard et homopolaire sont connectées aux bases de trois transistors de commande dont les collecteurs sont branchés d'une part au circuit logique de la porte OU, et d'autre part à des indicateurs de déclenchement susceptibles de déterminer la nature du défaut.

D'autres avantages et caractéristiques de l'invention ressortiront plus clairement de la description qui va suivre d'un mode de mise en œuvre de l'invention, donné à titre d'exemple non limitatif et représenté aux dessins annexés, dans lesquels :

la figure 1 est une vue synoptique du déclencheur statique selon l'invention ;

la figure 2 illustre un schéma détaillé d'une partie du déclencheur selon la fig. 1.

Sur les figures, le déclencheur statique 10 est piloté par quatre capteurs de courant, notamment des transformateurs d'intensités 12, 14, 16, 18 en forme de tores, couplés magnétiquement aux conducteurs R, S, T et N d'un réseau triphasé avec neutre protégé par un disjoncteur 20 à bobine de déclenchement 22. Chaque enroulement secondaire des transformateurs d'intensité 12 à 16, associés aux conducteurs des phases R, S, T, alimente un pont redresseur 24, 26, 28 à diodes et un enroulement primaire 23, 25, 27 d'un transformateur de terre 30 à noyau ferromagnétique jouant le rôle de détecteur de courant différentiel. L'enroulement secondaire du transformateur d'intensité 18 associé au conducteur neutre N est branché directement à l'enroulement primaire 29 du transformateur de terre 30. L'enroulement secondaire 31 de ce dernier effectue la sommation des courants circulant dans le réseau et délivre un signal à un pont redresseur 32 à double alternance lors de l'apparition d'un défaut différentiel sur le réseau. Les sorties des trois ponts redresseurs 24, 26, 28 sont connectées en série pour faire apparaître une tension redressée à double alternance E aux bornes de sorties 34, 36. L'une des sorties du pont redresseur 32, associée au transformateur différentiel 30, est branchée à la borne 34 portée à la polarité positive de la tension E. L'autre sortie du pont 32 est connectée par l'intermédiaire d'une résistance homopolaire 39 à une borne 38 de la polarité négative de la tension E.

Le dispositif est du type à propre courant dans lequel les transformateurs de courant 12 à 18 fournissent les signaux de mesure des courants de surcharge et homopolaire, et l'alimentation des circuits électroniques du déclencheur statique 10, et de la bobine 22 de déclenchement du disjoncteur 20.

Une résistance de mesure 40 du courant de surcharge connectée entre les bornes 36, 38, est le siège d'un signal de tension proportionnel à la valeur maximale du courant parcourant les conducteurs R, S, T du réseau. La résistance de mesure 40 ou tout autre moyen de détection de la présence d'un courant de surcharge, présente une résistance ohmique de valeur prédéterminée ou modifiable en fonction du courant nominal du disjoncteur. Un circuit série, désigné par le repère général 42, est branché aux bornes de sortie 34 et 36 des ponts redresseurs 24, 26, 28 et comporte en plus de la résistance de mesure 40, un dispositif d'alimentation 44 en tension continue régulée des circuits électroniques du déclencheur statique 10, et la bobine 22 de déclenchement du disjoncteur 20. La résistance de mesure 40, l'alimentation 44 et la bobine 22 sont ainsi reliées électriquement en série dans le circuit 42 alimenté par la tension redressée E.

Le signal de tension développé aux bornes de la résistance de mesure 40 est appliqué à un dispositif de traitement 46 formé par un circuit détecteur de crête classique qu'il est inutile de décrire en détail. Le signal mis en forme par le dispositif 46 pilote un circuit déclencheur long retard LR, un circuit déclencheur court retard CR, ou tout autre déclencheur 48, qui délivre un signal de déclenchement lorsque le courant détecté par les transformateurs d'intensité 12, 14, 16 dépasse un seuil ou une fonction prédéterminée. Les circuits déclencheurs CR et LR comportent d'une manière bien connue des amplificateurs opérationnels montés en comparateurs et polarisés à des seuils échelonnés de manière à délivrer des ordres de déclenchement temporisé en fonction du niveau du signal détecté par la résistance 40, entraînant soit un déclenchement instantané sur court-circuit soit un déclenchement retardé d'une durée fonction de la valeur de la surcharge. Les amplificateurs à seuils du circuit LR coopèrent avec un dispositif de temporisation pour définir une fonction d'amplitude et de temps de retard en assurant une courbe de déclenchement en gradins long retard en $I^2t$.

Le signal développé aux bornes de la résistance homopolaire 39 est appliqué à un circuit déclencheur homopolaire H qui fournit un ordre de déclenchement lors de l'apparition d'un défaut différentiel détecté par le transformateur 30.

Les sorties des circuits déclencheurs long retard LR, court retard CR, homopolaire H et 48 sont branchées à une porte OU 50 de commande d'un dispositif de commutation statique 52 connecté en parallèle aux bornes de la bobine 22 de déclenchement du disjoncteur. Le commutateur 52 bistable est formé par deux transistors 54, 56, la bobine 22 étant branchée entre le collecteur et l'émetteur du transistor 56 dont la base est reliée au collecteur du premier transistor 54. Le commutateur 52 à transistors 54, 56 peut être remplacé par tout autre élément de commutation à deux états de fonctionnement susceptible de se trouver respectivement dans un état de déblocage pour le shuntage de la bobine 22 lors du non-dépassement d'un seuil prédéterminé de déclenchement, et dans un état de blocage pour l'alimentation de la bobine 22 lors de la délivrance d'un signal de déclenchement émis par l'un des circuits déclencheurs LR, CR, H ou 48 après détection d'un courant de surcharge ou différentiel par l'un des transformateurs d'intensité 24 à 30.

Un condensateur 58 antiparasite et un élément limiteur de tension 60 du type Varistor à résistance non linéaire sont connectés respectivement en parallèle sur la bobine 22 de déclenchement. La tension développée aux bornes de la bobine 22 dans l'état bloqué du commutateur 52 est ainsi limitée lors de l'apparition d'une surintensité dans le circuit série 42.

Le dispositif d'alimentation 44 en tension continue des circuits électroniques de déclenchement comprend une diode Zener 62 dont la cathode est connectée au point de raccordement 64 de l'émetteur du transistor 56, et de l'une des bornes de la bobine 22. L'anode de la diode Zener 62 est raccordée à l'anode d'une diode 66 reliée par sa cathode à la borne 38 du circuit série 42. La tension prélevée au point intermédiaire 68 de la liaison des anodes des diodes 62, 66 sert de tension de référence et les polarités positive et négative de la tension continue d'alimentation délivrée par le dispositif 44 sont situées respectivement aux cathodes des mêmes diodes 62, 66.

Les sorties des circuits déclencheurs long retard LR, court retard CR et homopolaire H sont connectées respectivement aux bases de trois transistors 70, 72, 74 de commande dont les collecteurs sont branchés d'une part aux entrées du circuit logique OU 50, et d'autre part à des indicateurs de déclenchement 76, 78, 80 susceptibles de déterminer la nature de l'ordre de déclenchement lors de la conduction de l'un des transistors 70 à 74 dont chaque émetteur est au potentiel de référence du point 68. Une diode Zener 82 branchée entre la borne 34 et les indicateurs de déclenchement 76, 78, 80 assure la commande des signalisations lorsque la tension est suffisante aux bornes de la bobine 22 de déclenchement. Chaque indicateur de déclenchement 76 à 80 est shunté par une diode 84, 86, 88 dont la cathode est reliée à l'anode de la diode Zener 82.

Pour éviter un déclenchement intempestif du disjoncteur 20 à la mise sous tension, un dispositif de commande auxiliaire 90 provoque un déblocage initial du commutateur 52 à transistors 54, 56 pour assurer le court-circuitage de la bobine 22 de déclenchement dès l'apparition d'un courant dans les transformateurs d'intensité 12 à 18.

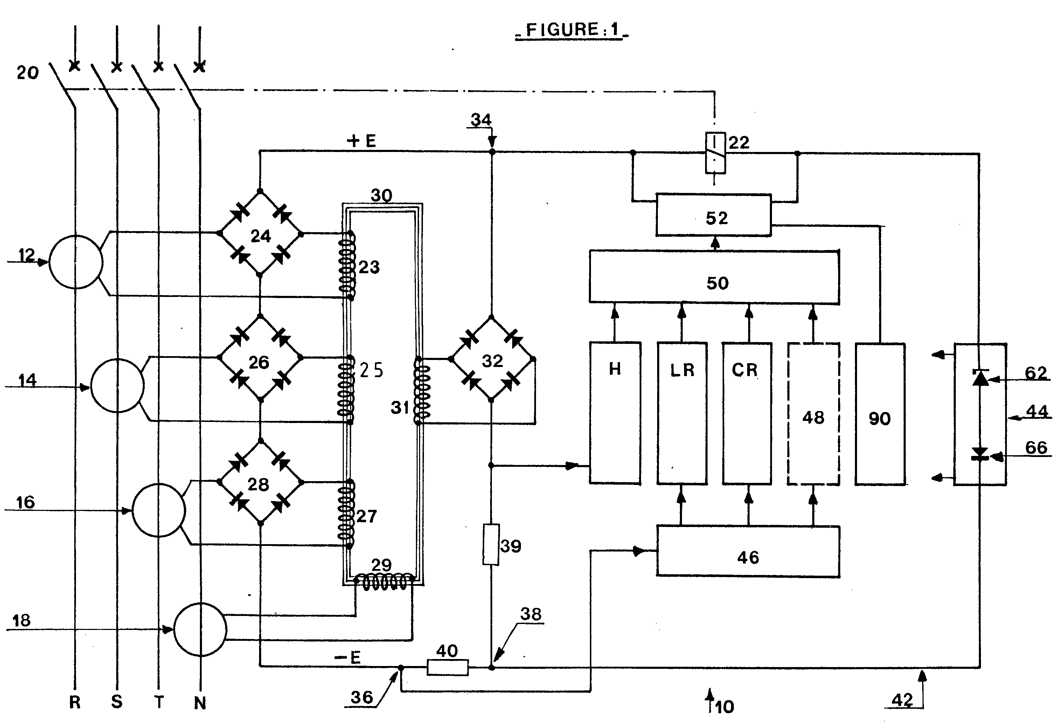

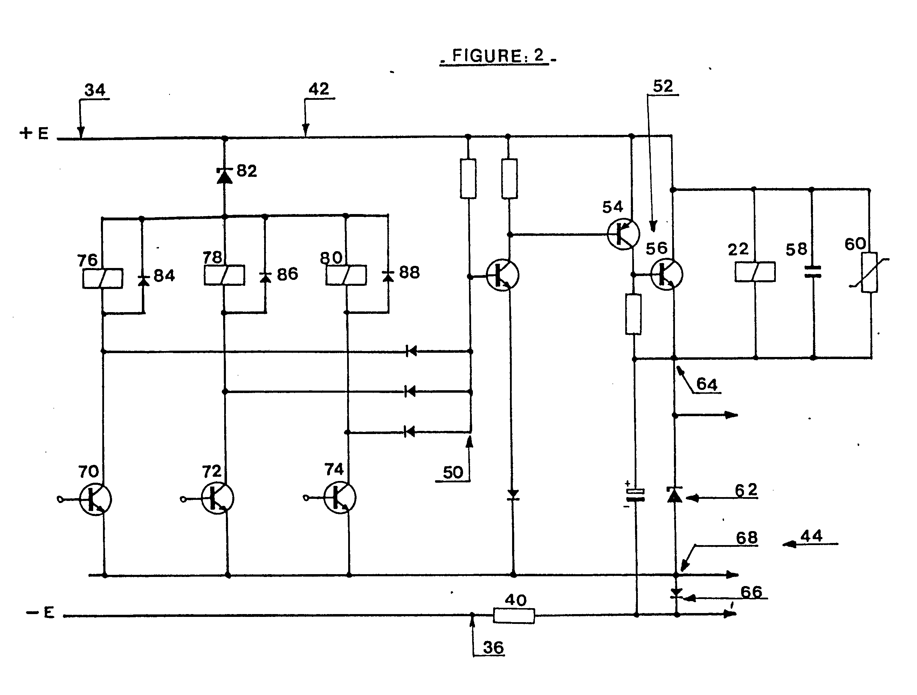

Le fonctionnement du déclencheur statique selon les figures 1 et 2 est le suivant :

En l'absence de défaut différentiel ou courant de surcharge au-delà d'un seuil prédéterminé le commutateur 52 se trouve normalement débloqué pour shunter la bobine 22 de déclenchement du disjoncteur 20 dont les contacts sont fermés. L'impédance Z du circuit série 42 est faible et dépend uniquement de la valeur de la résistance 40 et de l'impédance des diodes 62, 66. Les circuits électroniques déclencheurs LR, CR et H sont alimentés par le dispositif 44 à tension continue du circuit série 42 et la tension de commande aux bornes des résistances homopolaire 39 et de mesure 40 est insuffisante pour assurer l'émission d'un quelconque ordre de déclenchement vers la base du transistor 54. Le shuntage de la bobine 22 provoque le passage de tout le courant à travers le commutateur 52 et on remarque que toute l'énergie électrique fournie par les trois transformateurs 12 à 16 à partir des lignes R, S, T est utilisée pour fournir un signal de mesure ou d'information aux circuits déclencheurs ainsi que l'énergie pour l'alimentation 44.

Lors de l'apparition d'un courant différentiel sur le réseau détecté par le transformateur 30, le signal de tension homopolaire de la résistance 39 est appliqué au circuit déclencheur H, qui délivre un ordre de déclenchement différentiel à la porte OU 50. Il en est de même pour un courant de surcharge ou de court-circuit qui provoque l'émission d'un ordre de déclenchement temporisé ou instantané par l'un des circuits déclencheurs long retard LR ou court-retard CR commandés par la tension aux bornes de la résistance 40 de mesure. L'un quelconque de ces ordres de déclenchement assure le blocage du transistor 56 du commutateur 52 entraînant l'excitation immédiate de la bobine 22 de déclenchement suivie de l'ouverture des contacts du disjoncteur 20. La nature du défaut est signalé simultanément par l'un des indicateurs de déclenchement 76, 78, 80. La tension de mesure aux bornes des résistances 39 et 40 et l'alimentation 44 des circuits électroniques de déclenchement et de surveillance sont maintenues durant la phase de déclenchement précédant l'ouverture du disjoncteur. Dans l'état bloqué du commutateur 52, l'impédance Z du circuit série 42 augmente entraînant l'accroissement de la tension redressée E et la majorité de l'énergie électrique fournie par les ponts redresseurs du générateur de courant sert alors à alimenter la bobine 22 de déclenchement.

L'invention n'est bien entendu nullement limitée au mode de mise en œuvre plus particulièrement décrit et représenté aux dessins annexés, mais elle s'étend au contraire à toute variante restant dans le cadre des revendications.

**Revendications**

1. Dispositif de déclenchement électronique associé au mécanisme de commande d'un disjoncteur électrique de protection d'un réseau multipolaire, et comportant :

— un détecteur, notamment à transformateurs d'intensité (12, 14, 16, 18, 30) délivrant un signal représentatif du courant circulant dans les conducteurs de phase (R, S, T) du réseau,

— des circuits électroniques déclencheurs long retard (LR), court retard (CR), et/ou homopolaire (H), pour délivrer des ordres de déclenchement temporisés ou instantanés selon l'intensité et la nature du courant de défaut,

— et une bobine (22) de déclenchement dont l'alimentation par ledit détecteur est commandée par un commutateur (52) sensible à un ordre de déclenchement émis par l'un quelconque des circuits déclencheurs suite à la détection d'un courant de surcharge, de court-circuit ou différentiel, caractérisé par le fait que ledit signal représentatif du courant est appliqué à un circuit (42) comprenant en série une résistance de mesure (40),

— un dispositif d'alimentation (44) de tension continue régulée desdits circuits déclencheurs (H, LR, CR) et la bobine de déclenchement (22) aux bornes de laquelle est branché en parallèle le commutateur (52) susceptible de se trouver soit dans un état conducteur de déblocage provoquant le shuntage de la bobine (22) et le passage de tout le courant à travers le commutateur (52), soit dans un état de blocage après délivrance d'un ordre de déclenchement par l'un des long retard (LR), court retard (CR) et/ou homopolaire (H), qui provoque l'augmentation de l'impédance du circuit série (42) et l'excitation de la bobine (22) de déclenchement.

2. Dispositif de déclenchement électronique selon la revendication 1, caractérisé par le fait que ledit circuit série (42) de la résistance de mesure (40), de l'alimentation (44) et de la bobine de déclenchement (22) est connecté aux bornes de sorties d'un générateur de courant formé par un dispositif redresseur alimenté par les transformateurs d'intensités (12, 14, 16) du détecteur associés aux conducteurs de phase (R, S, T) du réseau.

3. Dispositif de déclenchement électronique selon la revendication 2, caractérisé par le fait que le signal de tension redressé aux bornes de la résistance de mesure (40) est appliqué après traitement aux circuits déclencheurs long retard (LR) et court retard (CR) coopérant avec des moyens de temporisation pour délivrer soit un ordre de déclenchement retardé d'une durée fonction de la valeur de la surcharge, soit un ordre de déclenchement instantané sur court-circuit à une porte OU (50) de commande du commutateur (52) rendu non-conducteur pour l'excitation de la bobine (22).

4. Dispositif de déclenchement électronique selon la revendication 3, caractérisé par le fait que la porte OU (50) de commande du commutateur (52) est connectée à la sortie du circuit déclencheur homopolaire (H) piloté par une tension représentative d'un courant de défaut différentiel et développé aux bornes d'une résistance homopolaire (39) par l'intermédiaire d'un transformateur différentiel (30).

5. Dispositif de déclenchement électronique selon la revendication 3 ou 4, caractérisé par le fait que le commutateur (52) est formé par un premier transistor (54) dont la base est reliée à la sortie de la porte OU (50) de commande et dont le collecteur est connecté à la base d'un deuxième transistor (56) de shuntage de la bobine de déclenchement (22).

6. Dispositif de déclenchement électronique selon la revendication 5, caractérisé par le fait que le dispositif d'alimentation (44) des circuits électroniques déclencheurs (H, LR, CR) comporte une diode Zener (62) dont la cathode est reliée à l'émetteur du deuxième transistor (56) et dont l'anode est branchée à l'anode d'une diode (66) raccordée en série avec la résistance de mesure (40) du circuit (42).

7. Dispositif de déclenchement électronique selon l'une des revendications 1 à 6, caractérisé par le fait qu'il comporte un dispositif de commande auxiliaire (90) évitant un déclenchement intempestif du disjoncteur à la mise sous tension en provoquant le déblocage initial du commutateur (52) et le court-circuitage de la bobine de déclenchement (22).

8. Dispositif de déclenchement électronique selon l'une des revendications 3 à 6, caractérisé par le fait que les sorties des circuits déclencheurs long retard (LR), court retard (Cr), et homopolaire (H) sont connectés aux bases de trois transistors de commande (70, 72, 74) dont les collecteurs sont branchés d'une part au circuit logique de la porte OU (50) et d'autre part à des indicateurs de déclenchement (76, 78, 80) susceptibles de déterminer la nature du défaut.

9. Dispositif de déclenchement électronique selon l'une des revendications précédentes, caractérisé par le fait qu'un élément limiteur de tension (60) à résistance non linéaire est branché en parallèle aux bornes de la bobine de déclenchement (22).

**Claims**

1. Electronic tripping device associated to the operating mechanism of a protective electric circuit breaker of a multi-polar net system, and comprising :
— a detector, in particular with current transformers (12, 14, 16, 18, 30) generating a signal representative of the current flowing through the phase conductors (R, S, T) of the net system,
— long delay (LR), short delay (CR), and/or ground fault (H) tripping electronic circuits to generate time-lag or instantaneous tripping orders according to the intensity and nature of the fault current,
— and a tripping coil (22) of which the supply by said detector is controlled by a selector switch (52) sensitive to a tripping order emitted by any of the tripping circuits following the detection of an overload, short-circuit or differential current, characterized in that said signal representative of the current is applied to a circuit (42) comprising in series a measuring resistance (40), a supply device (44) of regulated continuous voltage of said tripping circuits (H, LR, CR) and the tripping coil (22) to the terminals of which the selector switch (52) is connected in parallel, switch likely to be found either in a releasing conducting condition inducing the coil (22) shunting and the flow of all the current through the selector switch (52), or in a sticking condition after a tripping order is generated by one of the long delay (LR), short delay (LR) and/or ground fault (H) circuits, which induces the increase of the series circuit (42) impedance and the excitation of the tripping coil (22).

2. Electronic tripping device according to claim 1, characterized in that said series circuit (42) of the measuring resistance (40), of the supply (44) and of the tripping coil (22) is connected to the output terminals of a current generator formed by a rectifier device supplied by the current transformers (12, 14, 16) of the detector associated to the phase conductors (R, S, T) of the net system.

3. Electric tripping device according to claim 2, characterized in that the voltage rectified signal at the terminals of the measuring resistance (40) is applied, after processing, to the long delay (LR) and short delay (CR) tripping circuits cooperating with time-lag means to generate either a delayed tripping order of a duration depending of the overload value, or an instantaneous tripping order on short-circuit at an OR element (50) which controls the selector switch (52) rendered nonconducting for the coil excitation (22).

4. Electric tripping device according to claim 3, characterized in that the OR element (50) to control the selector switch (52) is connected to the output of the ground fault (H) tripping circuit driven by a voltage representative of a differential fault current and worked out at the terminals of a ground fault resistance (39) through a differential transformer (30).

5. Electric tripping device according to claim 3 or 4, characterized in that the selector switch (52) is formed by a first transistor (54), the base of which is connected to the output of the control OR element (50) and the collector of which is connected to the base of a second transistor (56) used to shunt the tripping coil (22).

6. Electric tripping device according to claim 5, characterized in that the supply device (44) of the tripping electronic circuits (H, LR, CR) comprises a Zener diode (62), the cathode of which is connected to the emitter of the second transistor (56) and the anode of which is branched to the anode of a diode (66) series connected with the measuring resistance (40) of the circuit (42).

7. Electric tripping device according to one of the claims 1 to 6, characterized in that it comprises an auxiliary control equipment (90) avoiding an untimely tripping of the circuit breaker when it is switched on by inducing the initial releasing of the selector switch (52) and the short-circuiting of the tripping coil (22).

8. Electric tripping device according to any of the claims 3 to 6, characterized in that the outputs of the long delay (LR), short delay (CR) and ground fault (H) tripping circuits are connected to the bases of the three control transistors (70, 72, 74), the collectors of which are branched to the logic circuit of the OR element (50) on one hand and to tripping indicators (76, 78, 80) likely to determine the nature of the fault on the other hand.

9. Electric tripping device according to one of the former claims, characterized in that a voltage limiter element (60) with non-linear resistance is connected in parallel to the terminals of the tripping coil (22).

**Ansprüche**

1. Elektronische Auslösevorrichtung mit einem Steuermechanismus eines elektrischen Schutzschalters eines mehrpoligen Netzes und bestehend aus :
— einem Detektor, insbesondere mit einem Stromwandler (12, 14, 16, 18, 30), der ein den Strom in den Netz-Phasenleitern (R. S, T) wiedergebendes Signal abgibt,
— elektronischen Auslöseschaltungen mit Langverzögerung (LR), Kurzverzögerund (CR) und/oder Summenstrom (H), um verzögerte oder unverzögerte Auslösebefehle abzugeben, gemäss der Stärke und der Art des Fehlerstroms,
— und einer Auslösespule (22), deren Versorgung durch den genannten Detektor von einem Schalter (52) gesteuert wird, der auf einen Auslösebefehl reagiert, der von irgendeiner der Auslöseschaltungen bei Erfassung eines Über-last-, Kurzschluss- oder Differentialstromes abge-geben wird, dadurch gekennzeichnet, dass das genannte den Strom darstellende Signal an eine Schaltung (42) angelegt wird, welche in Serie geschaltet einen Messwiderstand (40), eine regulierte Gleichspannungs-Versorgungsvorrichtung der genannten Auslöseschaltungen (H, LR, CR) und eine Auslösespule (22) aufweist, mit deren Klemmen der Schalter (52) parallel geschaltet ist, welcher sich entweder in einem leitfähigen Entriegelungszustand befindet und somit die Nebenschlussschaltung der Spule (22) und den Durchfluss des gesamten Stromes durch den Schalter (52) auslöst, oder in einem Verriegelungszustand ist, nach Abgabe eines Auslösebefehls durch eine der Langverzögerungs- (LR), Kurzverzögerungs- (CR) und/oder Summenstrom- (H) Schaltungen, der die Erhöhung des Widerstandes der Serien-Schaltung (42) und die Erregbarkeit der Auslösespule (22) bewirkt.

2. Elektronische Auslösevorrichtung gemäss Anspruch 1, dadurch gekennzeichnet, dass die genannte Serienschaltung (42) des Messwiderstandes (40), der Versorgung (44) und der Auslösespule (22) mit den Ausgangsklemmen eines Stromgenerators verbunden sind, welcher von einer Gleichrichtervorrichtung gebildet wird, die von den Stromwandlern (12, 14, 16) des Detektors gespeist wird, verbunden mit den Phasenleitern (R, S, T) des Netzes.

3. Elektronische Auslösevorrichtung gemäss Anspruch 2, dadurch gekennzeichnet, dass das gleichgerichtete Spannungssignal an den Klemmen des Messwiderstandes (40) nach Verarbeitung an die langverzögerungs- (LR) und Kurzverzögerungs (CR) Schaltungen angelegt wird, welche mit Verzögerungsmitteln zusammenarbeiten, um entweder einen verzögerten Auslösebefehl von einer vom Überlastwert abhängigen Dauer abzugeben, oder bei Kurzschluss einen unverzögerten Auslösebefehl an eine Tür ODER (50) abzugeben zur Steuerung des Schalters (52), der für die Erregung der Spule (22) nichtleitfähig gemacht wird.

4. Elektronische Auslösevorrichtung gemäss Anspruch 3, dadurch gekennzeichnet, dass die Tür ODER (50) zur Steuerung des Schalters (52) mit dem Ausgang der Summenstrom-Auslöseschaltung (H) verbunden ist, welche von einer den Differential-Fehlerstrom darstellende Spannung gesteuert und and den Klemmen eines mehrpoligen Widerstandes (39) mittels eines Differentialwandlers (30) ausgebildet wird.

5. Elektronische Auslösevorrichtung gemäss Anspruch 3 oder 4, dadurch gekennzeichnet, dass der Schalter (52) aus einem ersten Transistor (54) besteht, desses Basis mit dem Ausgang der Steuertür ODER (50) verbunden ist und dessen Kollektor mit der Basis eines zweiten Transistors (56) verbunden ist für die Nebenschlussschaltung der Auslösespule (22).

6. Elektronische Auslösevorrichtung gemäss Anspruch 5, dadurch gekennzeichnet, dass die Versorgungsvorrichtung (44) der elektronischen Auslöseschaltungen (H, LR, CR) eine Zenerdiode (62) aufweist, deren Kathode mit dem Sender eines zweiten Transistors (56) verbunden ist, und deren Anode mit der Anode einer Diode (66) verbunden ist, welche mit dem Messwiderstand (40) der Schaltung (42) in Serie geschaltet ist.

7. Elektronische Auslösevorrichtung gemäss einem der Ansprüche 1-6, dadurch gekennzeichnet, dass sie eine Hilfssteuervorrichtung (90) aufweist, die ein unzeitgemässes Auslösen des Leistungsschalters bei Unterspannungssetzen vermeidet, indem sie die Anfangs-Entriegelung des Schalters (52) und den Kurzschluss der Auslösespule (22) hervorruft.

8. Elektronische Auslösevorrichtung, gemäss einem der Ansprüche 3-6, dadurch gekennzeichnet, dass die Ausgänge der Langverzögerungs- (LR), Kurzverzögerungs- (CR) und Summenstrom- (H) Schaltungen mit der Basis der drei Steuertransistoren (70, 72, 74) verbunden sind, deren Kollektoren einerseits mit der logischen Schaltung der Tür ODER (50) verbunden sind, und andererseits mit Auslöseanzeigern (76, 78, 80), welche die Art des Fehlers bestimmen können.

9. Elektronische Auslösevorrichtung gemäss einem der vorhergehenden Ansprüche, dadurch gekennzeichnet, dass ein Spannungsbegrenzungselement (60) mit nichtlinearem Widerstand parallel mit den Klemmen der Auslösespule (22) geschaltet ist.

FIGURE:1

. FIGURE: 2 .

0 037 751